Europäisches Patentamt

European Patent Office

Office européen des brevets

(19)

(11) Publication number: **0 003 389**
**B1**

(12) **EUROPEAN PATENT SPECIFICATION**

(45) Date of publication of patent specification: **15.12.82**

(51) Int. Cl.³: **C 09 D. 5/16, B 05 D 5/00, C 08 L 91/06**

(21) Application number: **79300009.2**

(22) Date of filing: **04.01.79**

(54) **Process for coating underwater surfaces with wax and coating compositions thus applied.**

(30) Priority: **19.01.78 GB 213278**

(43) Date of publication of application:
**08.08.79 Bulletin 79/16**

(45) Publication of the grant of the patent:
**15.12.82 Bulletin 82/50**

(84) Designated Contracting States:
**DE FR GB NL**

(56) References cited:
**none**

(73) Proprietor: **The British Petroleum Company p.l.c.**
**Britannic House Moor Lane**
**London EC2Y 9BU (GB)**

(72) Inventor: **Crump, Ronald Alfred**
**Brit. Petrol. Co. Ltd. Britannic House Moor Lane**
**London EC2Y 9BU (GB)**
Inventor: **Goldie, Brian Peter Forsyth**
**BP Trading Limited Chertsey Road**
**Sunbury-on-Thames Middlesex TW16 7LN (GB)**

(74) Representative: **Eastman, Hugh Leonard et al,**
**BP INTERNATIONAL LIMITED Patents and**
**Licensing Division Chertsey Road**
**Sunbury-on-Thames Middlesex TW16 7LN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 003 389**

## Process for coating underwater surfaces with wax and coating compositions thus applied

This invention relates to the application of a wax coating to surfaces for underwater use, e.g. ships' hulls, and to the surfaces so treated.

The coating of surfaces intended for underwater use with wax to reduce roughness, corrosion and fouling has already been proposed. A particularly suitable method of application of the wax is described and claimed in GB - A - 1479701, the process claimed being a process for coating a surface intended for underwater use with wax, characterised in that the wax is applied as an aqueous dispersion of a wax. Surfaces coated with wax applied as described are also claimed.

The wax coating may contain a biocide effective against marine weed and/or shell growth. Thus, GB - A - 1479702 describes and claims a process for coating a surface capable of underwater use with wax, characterised in that the wax coating has a thickness of from 5 to 500 micrometres and contains at least one biocide dispersed or dissolved in the wax which is effective against marine weed and/or shell growth when so dispersed or dissolved. Surfaces coated with wax applied as described are also claimed. GB - A - 1479702 (which is equivalent to FR - A - 2264069) also discloses that the wax dispersion may contain from 1 to 20% wt. of an alkyd or shellac resin or polyethylene or polyvinyl acetate to assist in conferring high surface gloss on the coating.

It has now been found that a further improvement in the quality of the wax coating can be obtained if a particular polymer dispersion is used in combination with a wax dispersion.

One area of improvement may be in increased flexibility and toughness and hence a decrease in the tendency of the coating to crack or craze during use. Another area of improvement may be in controlling the porosity of the wax·coating and hence the rate of release of any biocide present.

According to the present invention, a process for coating a surface intended for underwater use with wax, comprising applying to the surface an aqueous dispersion of wax containing also a polymer, is characterised in that the polymer is film-forming on drying in air, has a minimum film-forming temperature below 5°C and forms stable aqueous dispersions, is present in an amount of from 1 to 25% wt by weight of the coating and is a copolymer of methyl methacrylate and butyl acrylate.

A minimum film forming temperature below 5°C is required, since the coatings may have to be applied at low ambient temperatures.

The term "film forming on drying in air" means that films are formed without the need for any chemical reaction such as cross-linking or curing.

The polymer should be capable of forming stable aqueous dispersions on its own or in admixture with wax dispersions. Preferably the aqueous wax and aqueous polymer dispersions are prepared separately and are mixed prior to the application to the surface to be coated. The mixing may be immediately prior to the application. Besides being compatible, the dispersions should also mix readily.

To ensure compatibility and ready mixing, the type of polymer dispersion is preferably the same as that of the wax dispersion, i.e. they are both anionic, which is preferred, or both cationic or nonionic.

The wax and the polymer have to be film forming so the dispersions, as applied, will normally be liquid-solid dispersions. However, they may be prepared as liquid-liquid emulsions and in certain circumstances may be liquid-liquid up to application provided a stable water-resistant film is produced. The terms "dispersion" and "emulsion" as used in this specification are to be understood in this sense.

In the copolymer of methyl methacrylate and butyl acrylate, the molar proportions may be from 60:40 to 40:60. Thus, suitable acrylate polymer dispersions are those sold under the Registered Trade Mark "Revacryl" by the Harlow Chemical Company, e.g. that sold as Revacryl 105.

The polymer content of the dispersion may be from 15 to 75% wt, preferably 25 to 60% wt and, as discussed in·more detail hereafter, the wax dispersion may similarly contain from 15 to 75% wt of wax, preferably 25 to 55% wt. The dispersions may be used in the required quantities to give the required amounts of polymer in the finished coating.

The wax dispersions may be prepared and have the characteristics described in GB - A - 1479701 and FR - A - 2264069.

Thus the dispersions may be prepared by emulsifying wax and water at a temperature above the melting point of the wax in the presence of an emulsifying agent and allowing the emulsion to cool. The average wax particle size may be from 0.05 to 10 micrometres and the emulsion may be passed through a homogeniser, e.g. a Manton-Gaulin Homogeniser to ensure a small wax particle size.

The dispersion may contain 15 to 75% wt of wax by weight of the dispersion, preferably 25 to 55% wt and may have a viscosity at 25°C such as to produce shear stresses of 0.05 to 88.0 Newton metres$^{-2}$ at shear rates of 7 to 1142 seconds$^{-1}$. At a shear rate of 100 sec$^{-1}$ preferred viscosities are from 0.004 to 0.1 Newton-seconds-metres$^{-2}$.

The emulsifying agent may be present in an amount of 0.2 to 10% wt by weight of the dispersion, preferably 1.0 to 5.0% wt and is preferably anionic, as indicated above. Preferred emulsifiers are amine salts of carboxylic acids particularly ammoniacal or ethanolamine salts of stearic or oleic acids.

A wide range of waxes may be used, preferably having a melting point of 45 to 120°C and a penetration of

2

$$\text{1 to 60 } \frac{mm}{10}$$

as measured by ASTM D1321. Preferably the wax is predominantly mineral wax derived from petroleum, e.g. paraffin or microcrystalline wax, but minor amounts of other waxes may be present, e.g. chlorinated or oxidised waxes, Montan wax, ozokerite, ceresine, carnauba wax and Fischer-Tropsch wax.

Other components of the wax dispersion, preferably in amounts of not more than 5% wt, may be polyisobutylene as a softener and plasticiser, a water soluble cellulose polymer as a bodying agent for the dispersion, a polyethylene glycol as a protective colloid for the wax particles to prevent agglomeration, and an alcohol, e.g. 2-ethyl hexanol, as a bubble release agent to give a smooth finished coating.

The thickness of the finished coating may be from 5 to 500 micrometres, preferably 50 to 400 micrometres, control being achieved by control of the viscosity of the dispersion and rate of application.

As previously indicated, the use of aqueous wax dispersions besides giving a smooth coating is also advantageous in that the coating has a degree of permeability to water so that any anti-fouling agent incorporated in the wax coating can be gradually released.

It has been found that the quantity of polymer present in the finished coating does affect its permeability and that at approaching 50% of polymer the coating may be very flexible and tough but relatively impermeable.

It has also been found, however, that within the present range of 1 to 25% it is possible to retain sufficient porosity to give controlled leaching of biocide and to balance this with a more modest but acceptable increase in flexibility and toughness.

The finished wax coatings are likely to be light in colour and may be transparent or translucent. It may be convenient therefore to add a dyestuff to the dispersion so that the coating can be clearly seen and its retention on the surface monitored. Adding a dyestuff to the wax dispersion can affect the stability of the dispersion. It has been found that the acrylate polymer dispersions are less sensitive to dyestuffs and in a preferred embodiment the acrylate polymer dispersion may contain a dyestuff preferably in an amount of from 1 to 25% wt by weight of the dispersion.

The invention is illustrated by the following examples.

The names "Hyvis", "Prifac" and "Cellosize" used in the examples are Registered Trade Marks, at least in the United Kingdom.

Example 1

An aqueous wax dispersion was formed from the following components.

|  | % wt |
|---|---|
| Paraffin wax of 60/62°C melting point | 45 |
| Montan wax (LP wax ex Hoechst A.G.) | 5 |
| Polyethylene glycol of 1500 M.W. (Carbowax 1500) | 0.5 |
| Stearic acid (Prifac 014) | 2.3 |
| Triethanolamine | 1.15 |
| Polyisobutylene of 350 $M_n$ (Hyvis 03) | 2.5 |
| 2-ethyl hexanol | 0.1 |
| Hydroxyethyl cellulose (Cellosize QP 4400L) | 0.075 |
| Tributyl tin oxide | 3.4 |
| Water | balance |

The dispersion was formed by stirring the components except the triethanolamine at 80°C in a 20 litre container. The triethanolamine was added slowly and stirring at 500 rpm was continued for 30 minutes at 80°C. The mixture was passed through a Manton-Gaulin homogeniser at 80°C and 138 bars (148 x 10⁶ N/m²) and then cooled rapidly to 30°C by means of a heat exchanger.

A Revacryl (Registered Trade Mark) 105 polymer dispersion sold by the Harlow Chemical

3

**O 003 389**

Company was coloured green by the addition of 15 parts of a dye Liquid Green 1001 to 100 parts of the dispersion. This coloured dispersion was then mixed with the wax dispersion in the ratio of three parts wax dispersion to one part polymer dispersion.

The wax polymer dispersion was sprayed onto the under-water surface of a 24000 DWT tanker in dry dock on top of anti-fouling paint. Two 4 metre wide strips were applied on either side of the ship using Atlas Copco A6F spray units with 0.53 mm (0.021 inch), 65 degree spray tips. The wet film thickness was 400 micrometres and the films dried to give semi-transparent dark green films containing 22% wt of polymer.

Visual under-water inspection after three months showed that the films were free of fouling and in good condition.

The Revacryl 105 dispersion used was a colloid-free dispersion containing 52 molar % of methyl methacrylate and 48 molar % of butyl acrylate and had the following properties.

| | |
|---|---|
| Solids content | 50.0% |
| pH | 8.8 |
| Brookfield LVT | |
| spindle 3 speed 30 | 500 cP (0.5 kg/m.s) |
| spindle 3 speed 60 | 150 cP (0.15 kg/m.s) |
| Specific gravity of dispersion | 1.05 |
| Specific gravity of polymer | 1.10 |
| Particle size, weight average | 0.2 micrometre |
| Minimum film-forming temperature | 3°C |

Example 2

| | % wt |
|---|---|
| Paraffin wax of 60/62°C melting point | 44 |
| Montan wax (LP wax ex Hoechst A.G.) | 5 |
| Polyethylene glycol (Carbowax 1500) | 0.5 |
| Stearic acid (Prifac 014) | 2.3 |
| Triethanolamine | 1.15 |
| Polyisobutylene (Hyvis 03) | 4 |
| 2-ethyl hexanol | 0.3 |
| Hydroxyethyl cellulose (Cellosize QP 4400L) | 0.05 |
| Tributyl tin oxide | 3.4 |
| Water | balance |

The dispersion was formed as described in Example 1 by blending the components in a 2 litre vessel.

This emulsion was sprayed onto mild steel test plates (dry film thickness ~300 micrometres) and dried to a clear film.

To 100 parts of the above wax emulsion 20 parts of Revacryl 105 polymer dispersion were added with stirring. The resultant wax-polymer dispersion was also sprayed onto mild steel test plates (dry film thickness ~300 micrometres) and dried to a clear film containing 14% of polymer.

The wax and wax-polymer coated test plates were immersed at 0.61 m depth from a jetty on the Isle of Wight. Regular inspections over a period of 25 weeks showed that the wax-polymer film had a greater resistance to cracking and crazing.

4

## Example 3

A series of dispersions were prepared using the dispersions and method of Example 2 and the dispersions were sprayed onto test plates to give dried films also as in Example 2. The proportions of the dispersions were varied, however, to give films containing different amounts of polymer.

The dispersions were sprayed onto mild steel test plates to a film thickness of 300 micrometres and immersed in sea water at Singapore for 6 months. The degree of fouling was assessed visually at the end of this period. The dispersions used and the results obtained are shown in the Table below.

TABLE

| Dispersions Used | | | Fouling Assessment | | |
|---|---|---|---|---|---|
| Wax Dispersion % wt | Polymer Dispersion % wt | Polymer in dry film % wt | Abundance* | Average Size | Coverage % |
| 90 | 10 | 10 | 3 | 5 mm dia | 10 |
| | | | 4 | microscopic | 70 |
| 95 | 5 | 5 | 3 | 5 mm dia | 20 |
| 100 | nil | nil | 1 | 3 mm dia | <10 |
| | | | 4 | microscopic | 90 |

* Rated usually on a scale from 1 (Rare) to 6 (Super-abundant)

The fouling assessment for all three plates was good having regard to the severe nature of the test, viz. immersion using static plates in a tropical sea for six months. The tests, therefore, showed that up to 10% wt of polymer could be incorporated into a wax film without significantly reducing the porosity and hence the leaching of biocide.

## Claims

1. A process for coating a surface intended for underwater use with wax comprising applying to the surface an aqueous liquid-solid dispersion or liquid-liquid emulsion of wax containing also a polymer, characterised in that the polymer is film forming on drying in air without the need for any chemical reaction such as cross-linking or curing, has a minimum film forming temperature below 5°C and forms stable aqueous dispersions, is present in an amount of from 1 to 25% wt by weight of the coating and is a co-polymer of methyl methacrylate and butyl acrylate.

2. A process as claimed in claim 1 characterised in that the coating contains from 2 to 15% wt of polymer.

3. A process as claimed in claim 1 or 2 characterised in that an aqueous wax dispersion and an aqueous dispersion of the polymer are formed separately and mixed.

4. A process as claimed in claim 3 characterised in that the polymer dispersion contains from 15 to 75% wt of polymer.

5. A process as claimed in claim 3 or 4 wherein the polymer dispersion contains a dyestuff.

6. A process as claimed in any of claims 1 to 5 wherein the molar proportions of methyl methacrylate and butyl acrylate in the copolymer are from 60:40 to 40:60.

## Revendications

1. Un procédé pour revêtir de cire une surface destinée à être utilisée sous l'eau, comprenant l'application à la surface d'une dispersion aqueuse liquide-solide ou d'une émulsion aqueuse liquide-liquide de cire contenant également un polymère, caractérisé en ce que le polymère forme une pellicule en séchant à l'air sans exiger une réaction chimique quelconque telle qu'une réticulation ou une vulcanisation, il a une température minimum de formation de pellicule inférieure à 5°C et forme des dispersions aqueuses stables, est présent en proportions de 1 à 25% du poids du revêtement et consiste en un copolymère du méthacrylate de méthyle et de l'acrylate de butyle.

2. Procédé selon la revendication 1, caractérisé en ce que le revêtement contient de 2 à 15% en poids de polymère.

3. Procédé selon la revendication 1 ou 2, caractérisé en ce que l'on forme séparément une dispersion aqueuse de cire et une dispersion aqueuse de polymère qu'on mélange.

4. Procédé selon la revendication 3, caractérisé en ce que la dispersion de polymère contient de 15 à 75% en poids de polymère.

5. Procédé selon la revendication 3 ou 4, dans lequel la dispersion de polymère contient un colorant.

6. Procédé selon l'une quelconque des revendications 1 à 5, dans lequel les proportions molaires du méthacrylate de méthyle et de l'acrylate de butyle dans le copolymère vont de 60:40 à 40:60.

## Patentansprüche

1. Verfahren zum Überziehen einer für den Unterwassergebrauch vorgesehenen Oberfläche mit Wachs unter Aufbringen des Wachses als eine auch ein Polymerisat enthaltende wäßrige Flüssig-Fest-Dispersion oder Flüssig-Flüssig-Emulsion, dadurch gekennzeichnet, daß das Polymerisat ohne die Notwendigkeit einer chemischen Reaktion, wie Vernetzen oder Vulkanisieren, beim Trocknen an der Luft filmbildend ist, eine Mindestfilmbildungstemperatur unter 5°C aufweist und stabile wäßrige Dispersionen bildet, in einer Menge von 1 bis 25 Gew.-% des Überzuges vorliegt und ein Copolymerisat aus Methylmethacrylat und Butylacrylat darstellt.

2. Verfahren nach Anspruch 1, dadurch gekennzeichnet, daß der Überzug 2 bis 15 Gew.-% Polymerisat enthält.

3. Verfahren nach Anspruch 1 oder 2, dadurch gekennzeichnet, daß getrennt eine wäßrige Wachsdispersion und eine wäßrige Polymer-dispersion gebildet und diese gemischt werden.

4. Verfahren nach Anspruch 3, dadurch gekennzeichnet, daß die Polymerdispersion 15 bis 75 Gew.-% Polymerisat enthält.

5. Verfahren nach Anspruch 3 oder 4, dadurch gekennzeichnet, daß die Polymerdispersion einen Farbstoff enthält.

6. Verfahren nach irgendeinem der Ansprüche 1 bis 5, dadurch gekennzeichnet, daß die Molverhältnisse von Methylmethacrylat und Butylacrylat im Copolymerisat 60:40 bis 40:60 betragen.